# EUROPÄISCHE PATENTSCHRIFT

(11) **EP 0 290 726 B1**
(45) Veröffentlichungstag und Bekanntmachung des Hinweises auf die Patenterteilung: **01.12.1993**
(21) Anmeldenummer: 88102961.5
(22) Anmeldetag: 27.02.1988
(51) Int. Cl.: B07C 5/34

(54) **Becherfüllwerk für Nahrungs- und Genussmittel, insbesondere für Molkereiprodukte**
Cup-filling mechanism for luxury foods, in particular for dairy produce
Mécanisme de remplissage de gobelets destinés à des produits nutritifs et d'agrément, en particulier à des produits laitiers

(30) Priorität: 14.05.1987 DE 3716095
(43) Veröffentlichungstag der Anmeldung: 17.11.1988
(73) Patentinhaber: Hamba-Maschinenfabrik Hans A. Müller GmbH & Co KG, D-42275 Wuppertal 2 (DE)
(72) Erfinder: Bausch, Franz-Hubert, D-5600 Wuppertal 21 (DE)
(74) Vertreter: Ostriga, Harald

(56) Entgegenhaltungen:
- DE-A- 2 837 997
- DE-A- 3 528 248
- US-A- 3 261 465
- US-A- 4 024 956

## Beschreibung

Die Erfindung betrifft ein Becherfüllwerk, wie es entsprechend dem Oberbegriff des Patentanspruchs 1 im wesentlichen durch die DE-OS 35 28 248 bekanntgeworden ist.

Beim Becherfüllwerk der DE-OS 35 28 248 funktioniert die Dichtigkeits-Kontrollstation wie folgt: ein Taster, der zugleich einen Heizkopf bildet, wird auf den angesiegelten bzw. angeschweißten Deckel z.B. eines Joghurtbechers aufgesetzt. Dabei soll die vom Heizkopf ausgehende Wärme das zwischen Deckelunterseite und Füllgut befindliche Luftpolster erwärmen. Während dieser Erwärmungsphase wird der Heizkopf mittels einer pneumatischen Zylinder-Kolben-Einheit gegen die Deckeloberseite gedrückt. Nach Beendigung der Erwärmungsphase fährt die pneumatische Zylinder-Kolbven-Einheit wieder ein, so daß der Heizkopf nur mit seinem Eigengewicht und einer zusätzlichen Feder-Andruckkraft auf der Deckeloberseite aufliegt. Hat nun der aufgesiegelte bzw. aufgeschweißte Deckel eine Leckstelle, so ist die durch die Erwärmung ausgedehnte Luft durch die Leckstelle hindurch entwichen, mit der Folge, daß der zugleich einen Taster bildende Heizkopf seine unveränderte Höhenlage beibehält.

Für den Fall, daß der Deckel dicht ist, wird der Taster bzw. der Heizkopf durch das sich wärmebedingt ausdehnende deckelunterseitige Luft- oder Gaspolster um einen Betrag von etwa 0,5 bis 1 mm angehoben. Diese axiale Höhenbewegung des Tasters wird berührungslos qualitativ über eine Lichtschranke angezeigt. Becher mit undichten Deckeln können sodann bezeichnet und in irgendeiner zweckmäßigen Weise ausgesondert werden.

Das bekannte Becherfüllwerk wird als verbesserungsbedürftig empfunden, da dessen Dichtigkeitskontroll-Station wegen der komplizierten Bau- und Betriebweise (Schaffung eines Wärmeübergangs unter pneumatischer Druckauflastung, nachfolgende Druckentlastung, nachfolgendes Hochheben des Tasters und berührungslose Erfassung einer eventuellen Höhenabweichung) für ein Becherfüllwerk, das mit sehr hoher Arbeitsfrequenz betrieben werden soll, häufig ingesamt zu aufwendig, insbesondere zu zeitaufwendig ist. Zu bedenken ist auch, daß die Erwärmungszeit mit dem Volumen des Luftpolsters zunimmt. In diesem Zusammenhang ist erwähnenswert, daß sechs bis achtbahnige Doppelschritt-Becherfüllwerke heutzutage mit einer Arbeitsfrequenz von etwa 25000 - 33000 Bechern/h betrieben werden.

Entsprechend einer Variante der DE-OS 35 28 248 (s. dort Sp. 3 Z. 49-58) soll der Behälterdeckel nach dem Erwärmen und vor dem Abtasten bzw. Anzeigen des Prüfergebnisses von seiner Außenseite her vorübergehend mit Druck beaufschlagt werden. Hierdurch sollen der Wärmeübergang beschleunigt und die Luft bzw. das Gas durch die möglicherweise im Deckel vorhandenen Öffnungen gedrückt werden, so daß bei einem fehlerhaften Deckel dieser in seiner Lage verbleibt, hingegen sich ein fehlerfreier Deckel nach oben bewegt, sobald dieser Druck wieder aufgehoben wird. Auch diese Variante erfordert - zumal unter dem Gesichtswinkel von taktweise arbeitenden Becherfüllwerken sehr hoher Arbeitsfrequenz - einen zu hohen Zeitaufwand. Auch wird der maschinelle Aufwand wegen der vielfältigen Bewegungsabläufe der beteiligten Arbeitsmittel auch bei dieser vorbekannten Variante nicht geringer.

Im übrigen ist auch eine Erwärmung des Luftpolsters zwischen Füllgut und Deckelunterseite nicht immer zweckmäßig. Jedenfalls ist eine solche Erwärmung bei Butter- oder Margarinebechern mit angesiegelten Deckeln wegen der zwangsläufig auftretenden oberflächlichen Produktveränderung nicht durchführbar. Auch ist die Heizkopf-Temperaturhöhe wegen einer möglichen Wärmeempfindlichkeit des farbigen Deckelaufdrucks begrenzt. Schließlich läßt sich die Dichtigkeitskontroll-Station des bekannten Becherfüllwerks dann nicht einsetzen, wenn ohnehin warmes Füllgut, z.B. Puddinge, verarbeitet werden.

Ausgehend von dem eingangs beschriebenen bekannten Becherfüllwerk (DE-OS 35 28 248) dieser Gattung, liegt der Erfindung die Aufgabe zugrunde, ein Becherfüllwerk mit einer Dichtigkeitskeitskontroll-Station zu schaffen, welche unabhängig von der Konsistenz und der Temperatur des Füllgutes ohne weiteres auch bei Becherfüllwerken mit sehr hohen Arbeitsfrequenzen einsetzbar ist. Diese Aufgabe wurde entsprechend dem Kennzeichenteil des Patentanspruchs 1 gelöst.

Die Dichtigkeitskontroll-Station des erfindungsgemäßen Becherfüllwerks arbeitet verfahrensmäßig so, daß die Wandung des mit einem aufgesiegelten bzw. aufgeschweißten Deckel versehenen Bechers zusammengedrückt und hierdurch eine Volumenverlagerung bewirkt wird, während zur gleichen Zeit die membranartige Bombierung der Deckeloberseite beobachtet wird. Dieses erfindungsgemäß mit dem Becherfüllwerk betriebene Verfahren hat sich in der Praxis als einfach realisierbar und sicher durchführbar herausgestellt. Die Erfindung ist unabhängig von der Konsistenz und der Temperatur des dünnflüssigen bis pastösen Füllgutes anwendbar. Die unterhalb des Zellenbrettes angeordneten hin- und herbeweglich antreibbaren Druckflächen, welche bei jeweils auf der Deckeloberseite aufsitzendem Signaltaster die Becherwandung rückstellbar verformen, lassen sich in einfacher Bauweise und hinsichtlich ihrer Betriebsweise mit sehr kurzen Arbeitstaktzeiten realisieren.

Dadurch, daß jeweils zwei Druckflächen einen Bechermantel außenseitig zugleich und symmetrisch, d.h. gleichzeitig an diametral gegenüberliegenden Becherseiten, angreifen, verbleibt der Becher während des Kontrollvorganges ruhig in der Becheraufnahme, so daß Fehlsignale auf einfache Weise vermieden werden können. Fehlsignale werden in weiterer Ausgestaltung der Erfindung auch dadurch vermieden, daß mehrere gemeinsam mit den Signaltastern absenkbare, diesen jedoch in Absenkrichtung voreilende, das Zellenbrett von oben her gegen ein zellenbrettunterseitiges Widerlager arretierende Niederhalter vorgesehen sind. Auf diese Weise ist gewährleistet, daß sich das Zellenbrett während des Kontrollvorganges in einer genau definierten Höhenlage befindet, so daß unzulässige Höhenabweichungen des Signaltasters, die sonst zu Fehlsignalen führen würden, ausgeschaltet sind.

Im übrigen ist es seit längerer Zeit ohne Anwendung auf eine Dichtigkeitskontrolle bekannt (s. z.B. auch DE-OS 35 28 248 Sp. 2 Z. 57-61), eine trommelfellähnliche Spannung des Deckels zu erzeugen, wenn bei gasenden Produkten der Behälter, z.B. unter der Siegelstation, seitlich eingedrückt wird, um beim Aufheben des Drucks im Behälter ein Vakuum zu erzeugen.

Von der US-A- 4 024 956 sind oberhalb eines Fördergurtes angeordnete hin- und herbeweglich angetriebene Druckflächen bekannt, welche gegen die Seitenflächen des zu testenden, gegebenenfalls auch eine Flüssigkeit enthaltenden Gegenstandes drücken, der sofern er dicht ist, sich in meßbarer Weise rückstellbar verformt. Dieses bekannte Grundprinzip wird, nachdem es in eigenartiger Weise angepaßt und ausgestaltet wurde, auch beim erfindungsgemäßen Becherfüllwerk benutzt.

Weitere Merkmale des Becherfüllwerks ergeben sich aus zusätzlichen Unteransprüchen.

In den Zeichnungen ist die Erfindung anhand bevorzugter Ausführungsbeispiele näher erläutert.

Es zeigen:
Fig. 1 eine schematische Seitenansicht eines Becherfüllwerks,
Fig. 2 und 3 in schematischer Darstellung die Funktion der Dichtigkeitskontroll-Station, wobei Fig. 2 die Station vor der Inbetriebnahme und Fig. 3 die Station während des Betriebs zeigen,
Fig. 4 eine vergrößerte Seitansicht (teilweise im Längsschnitt) etwa entsprechend der in Fig. 1 mit IV bezeichneten Teileinkreisung,
Fig. 5 eine Draufsicht entsprechend dem mit V bezeichneten Pfeil in Fig. 4 und
Fig. 6 eine vereinfachte (d.h. unvollständige) Stirnansicht entsprechend dem in Fig. 5 mit VI bezeichneten Ansichtspfeil.

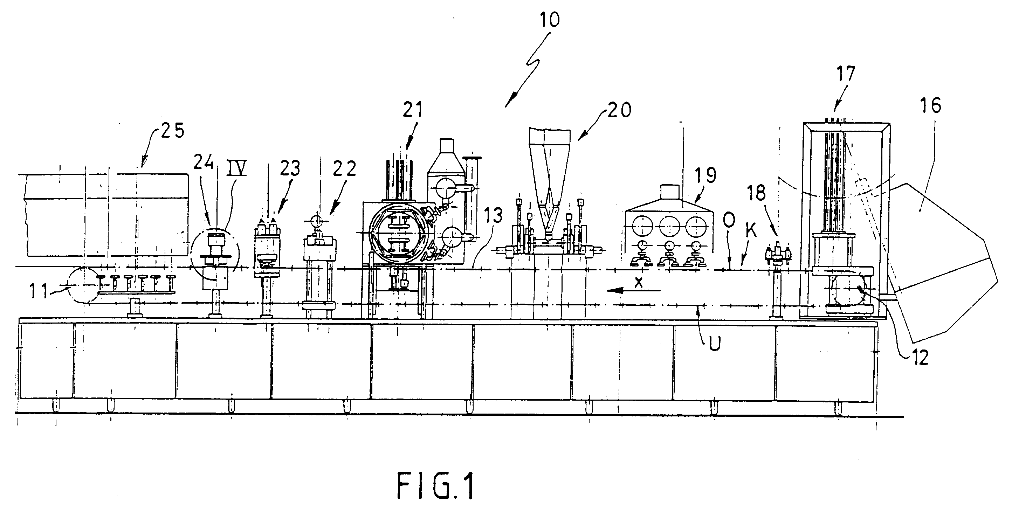

Das Becherfüllwerk in Fig. 1 ist insgesamt mit der Bezugsziffer 10 bezeichnet. Eine umlaufend geführte Förderkette K mit einem Oberturm O und einem Untertrum U läuft über Kettensterne 11 und 12. Die Förderkette K weist in Fig. 1 schematisch dargestellte Zellenbretter 13 auf, die mit Becheraufnahmen 14 (s. Fig. 1, 2 und 6) für elastisch bzw. rückstellbar verformbare Kunststoffbecher 15 versehen sind. Die Förderrichtung der im Obertrum O aufgenommenen Becher 15 ist mit x bezeichnet.

In Richtung x des Förderflusses sind die Arbeitsstationen des Becherfüllwerks 10 folgende:
16 stellt die Becherstangenaufgabe, 17 die Becheraufgabe-Station, 18 den Fühler für fehlende bzw. für doppelte Becher, 19 die Becherentkeimung beispielsweise durch Wasserstoff-Peroxyd, 20 den Hauptdoseur, 21 die Deckelauflege-Station, 22 die Siegelstation, 23 das Druckwerk zum Aufbringen des Verfallsdatums, 24 die Dichtigkeitskontroll-Station und schließlich 25 die Becherentnahme-Station dar.

Das Becherfüllwerk 10 arbeitet als Doppelschrittmaschine, d.h. mit doppeltem Vorschub, was bedeutet, daß jede Arbeitsstation doppelt besetzt ist. Der Vorschub erfolgt intermittierend taktweise. Je höher demnach die Arbeitsfrequenz, desto geringer ist die Taktzeit, in welcher jede Arbeitsstation die ihr zugeweisene Arbeit beginnen und beenden muß. Dies gilt auch für die Dichtigkeitskontroll-Station des eine Arbeitsleistung von ca. 33600 Becker/h erbringenden Becherfüllwerks 10.

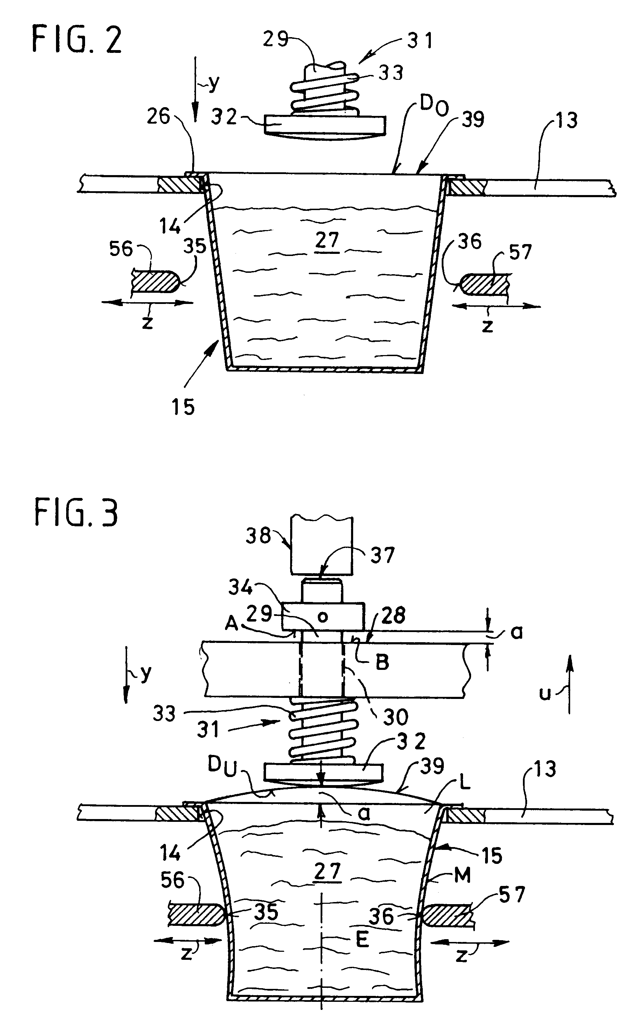

In Fig. 2 ist ein Zellenbrett 13 mit einer Becheraufnahme 14 und einem darin mittels eines Becherflansches 26 gehaltenes Bechers 15 schematisch dargestellt. Das Füllgut, z.B. Joghurt, ist mit 27 bezeichnet.

Der Becher 15 ist mittels eines beispielsweise aus Aluminiumfolie bestehenden Deckels 39, dessen unterer Außenrand mit einer Siegelschicht versehen ist, thermisch dicht versiegelt. Sobald sich der Becher 15 in der gemäß Fig. 2 dargestellten Position (z.B. in Förderrichtung x in die Papierebene hineingetaktet) befindet, senkt sich ein Tragjoch 28 in Richtung y nach unten. Das Tragjoch 28 trägt für jeden zu kontrollierenden Becher einen mit einem Stößelschaft 29 innerhalb einer Aufnahmebohrung 30 gleitbar aufgenommenen Taster 31. Der Taster 31 besitzt unten einen Tastteller 32, welcher oberseitig auf seinem Schaft 29 eine Druckfeder 33 lagert, deren oberes Ende sich unterseitig am Tragjoch 28 abstützt. Oberhalb des Tragjochs 28 ist der Stößelschaft 29 mit einem Anschlagbund 34 versehen, dessen untere Anschlagfläche A in der nicht gezeigten Ruhelage des Tasters 31 an der oberen Anschlagfläche B des Tragjochs 28 anliegt.

Zwei Druckflächen 35, 36 bilden ein Druckflächenpaar. Die Druckflächen 35, 36 sind entgegengesetzt zueinander entlang dem geradlinigen Doppelpfeil z quer zur Förderrichtung x beweglich.

Sobald der Becher 15 seine Position gemäß Fig. 2 erreicht hat, wird das Tragjoch 28 in Richtung y abgesenkt und der Tastteller 32 setzt auf der Deckeloberseite D_{O} auf (Fig. 3). Zugleich werden die Druckflächen 35, 36 entlang der Richtung z zugestellt und drücken hierbei den Mantel M des Bechers 15 gleichzeitig an diametral gegenüberliegenden Stellen symmetrisch gewissermaßen elastisch, d.h. ohne bleibende Verformung, rückstellbeweglich zusammen. Hierbei ergibt sich zunächst eine hydraulische Ausgleichsbewegung des flüssigen Füllgutes (Joghurt) 27 nach oben in Richtung u, wobei das Luftpolster L komprimiert, hierdurch die Deckelunterseite Dᵤ druckbeaufschlagt und der Deckel 39 mit einem Betrag a in Richtung u bombiert wird. Um denselben Betrag a hebt sich hierbei die Anschlagfläche A des Anschlagbundes 34 von der tragjochseitigen oberen Anschlagfläche B ab. Derselbe Axialhub a der oberen Stirnfläche 37 des Stößelschaftes 29 wird von einem elektrischen, z.B. kapazitiven oder induktiven Näherungsschalter 38 wahrgenommen, dessen Signal in diesem Falle bedeutet, daß der Deckel 39 den Becher 15 dicht verschließt.

Für den Fall, daß der Deckel 39 nicht dichtend mit dem Becherflansch 26 versiegelt oder verschweißt sein sollte bzw. der Foliendeckel 29 ein Loch aufweise, träte bei der Zustellbewegung des Druckflächenpaares 35, 36 selbstverständlich keine Bombierung oder nur eine geringe Bombierung des Deckels 39 in Richtung u auf, so daß der Näherungsschalter 38 keine Annäherung der Stirnfläche 37 des Stößelschaftes 29 bemerken könnte. In einem solchen Falle würde ein Störsignal ausgelöst, welches auf zweckmäßige Weise eine Markierung und ggf. eine selbsttätige nachfolgende Aussonderung des mit einem schadhaften Deckel versehenen Bechers veranlassen könnte.

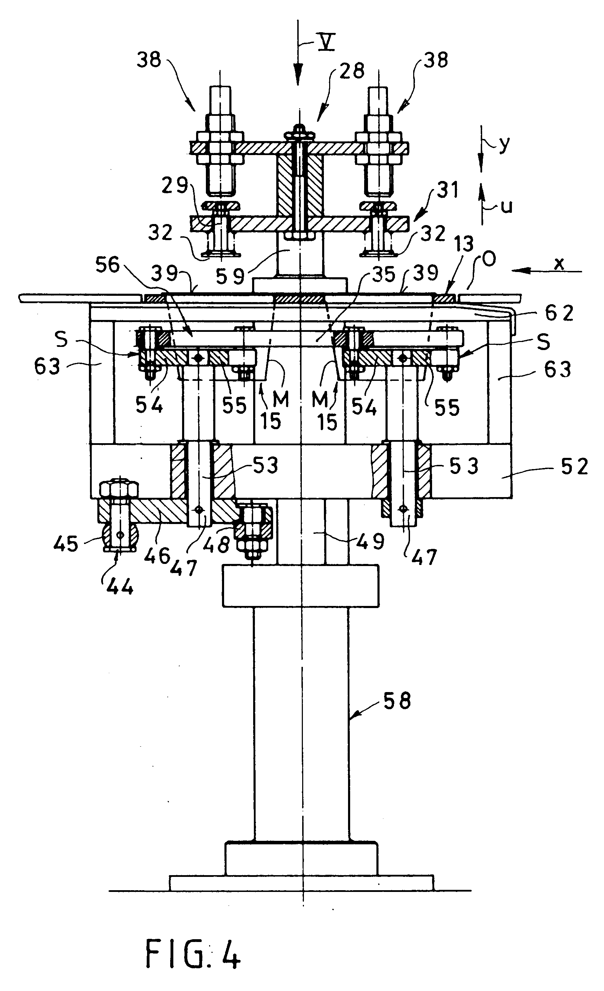

Eine mögliche praktische Ausführungsform ist aus den Darstellungen gemäß den Fig. 4-6 zu ersehen.

Eine hinsichtlich ihres Arbeitshubes über ein Stellrad 40 einstellbare pneumatische Zylinder-Kolben-Einheit 41 greift über einen Gabelkopf 42 und über eine in zwei Gelenken 43, 44 angelenkte Antriebsstange 45 an einem Doppelhebel 46 an.

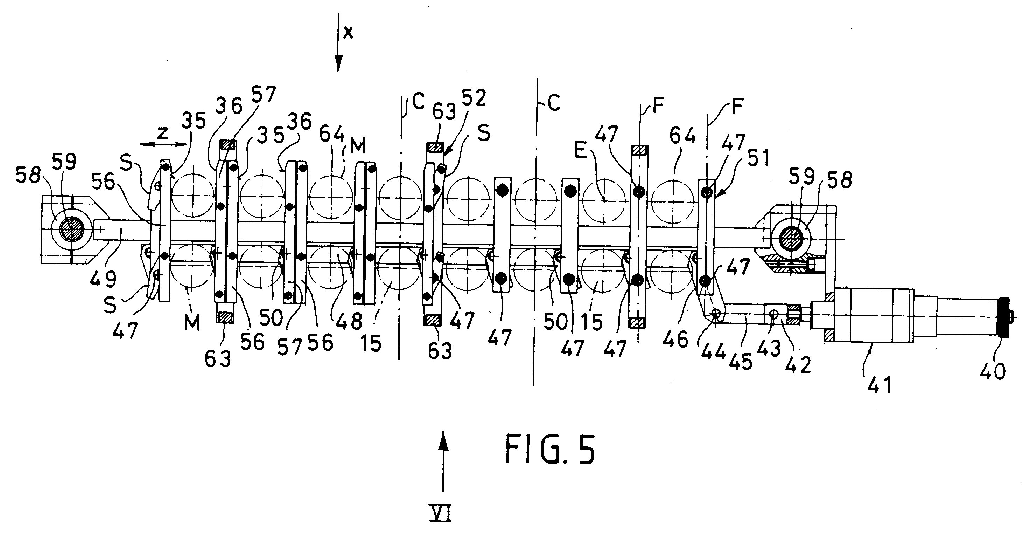

Der Doppelhebel 46 sitzt drehfest auf dem untersten Ende einer Exzenterwelle 47, welche bei der dargestellten achtbahnigen Maschine, wie im folgenden noch näher erläutert wird, in gleicher oder ähnlicher Form 18 mal vorkommt. Das innere Ende des Doppelhebels 46 ist gelenkig mit einer Kuppelstange 48 verbunden, welche das gesamte Becherfüllwerk 10 praktisch quer durchsetzt bzw. quer zwischen Obertrum O und Untertrum U hindurchreicht. Die Kuppelstange 48 dient dazu, die aus Fig. 5 unterhalb der Tragtraverse 49 eingezeichneten Exzenterwellen 47 (die rechts unterhalb von 49 in Fig. eingezeichnete Exzenterwelle 47 ausgenommen) über jeweils fest auf der betreffenden Exzenterwelle 47 sitzende Kurbelarme 50 anzutreiben.

Immer zwei Exzenterwellen 47 sind auf kurzen Tragkonsolen 51 oder auf längeren Tragkonsolen 52 mit einem unteren axialen Lagerbereich 53 drehgelagert.

Der obere Stirnbereich einer jeden Exzenterwelle 47 ist mit Exzenterhebeln 54, 55 versehen. Jeweils zwei Exzenterhebel 54, 55 bilden hierbei einen zweiarmigen Hebel in Form einer Schwinge S. Die Exzenterwellen 47 befinden sich jeweils auf einer den Becherbahnen (Becherbahn-Längsachse mit C bezeichnet) parallelen Fluchtlinie F.

Die Schwingen S haben die Aufgabe, die Druckflächenpaare 35, 36 gemäß Fig. 2 und 3 entsprechend dem mit z bezeichneten Doppelpfeil gegen die Bechermäntel M bzw. von diesen weg zu bewegen. Die Druckflächenpaare 35, 36 sind Laschenpaaren 56, 57 zugeordnet. Die links außen aus Fig. 5 ersichtlichen beiden Schwingen S tragen gemeinsam lediglich eine Lasche 56, ebenso wie die rechts außen in Fig. 5 vorstellbaren aber nicht gezeigten Schwingen S, die dort auf den beiden Exzenterwellen 47 sitzen. Alle anderen Schwingen S tragen jeweils Laschen 57, 56 unterschiedlicher Laschenpaare. Aus Fig. 4 sind die auf der rechts in Fig. 5 dargestellten langen Tragkonsole 52 angeordneten Schwingen S zu ersehen. Der in Fig. 4 dargestellte Doppelhebel 46 mit der Antriebsstange 45 gehört streng genommen nicht an die gezeichnete Stelle, jedoch wurden die Bauteile 46, 45 in Fig. 4 eingezeichnet, um auch den Übergang zum Antrieb 41 (s. Fig. 5) herzuleiten.

Die Antriebsfunktion ist nun folgende: wenn die Antriebsstange 45 der Antriebseinheit 41 ausgefahren wird, drehen sich die unten aus Fig. 5 ersichtlichen Exzenterwellen 47 im Uhrzeigersinne ebenso wie die zugehörigen Schwingen S. Demzufolge bewegt sich die links außen aus Fig. 5 ersichtliche Lasche 56 quer nach rechts, ebenso wie die der Lasche 56 in rechter Richtung nächstfolgende Lasche 56. Die Laschen 56, 57 bilden aber zugleich eine Bewegungskupplung zwischen den unten und oben aus Fig. 5 eingezeichneten Schwingen S. Bei Ausfahren der Antriebsstange 45 und sich entsprechend bewegender Kupplungsstange 48 (Exzenterwellen 47 laufen im Uhrzeigersinne um) bewegen sich alle Laschen 56 gleichzeitig nach rechts und alle Laschen 57 gleichzeitig nach links. Auf diese Weise kommt die im Zusammenhang mit den Fig. 2 und 3 beschriebene Bewegung der Druckflächen 35, 36 in den Richtungen z zustande.

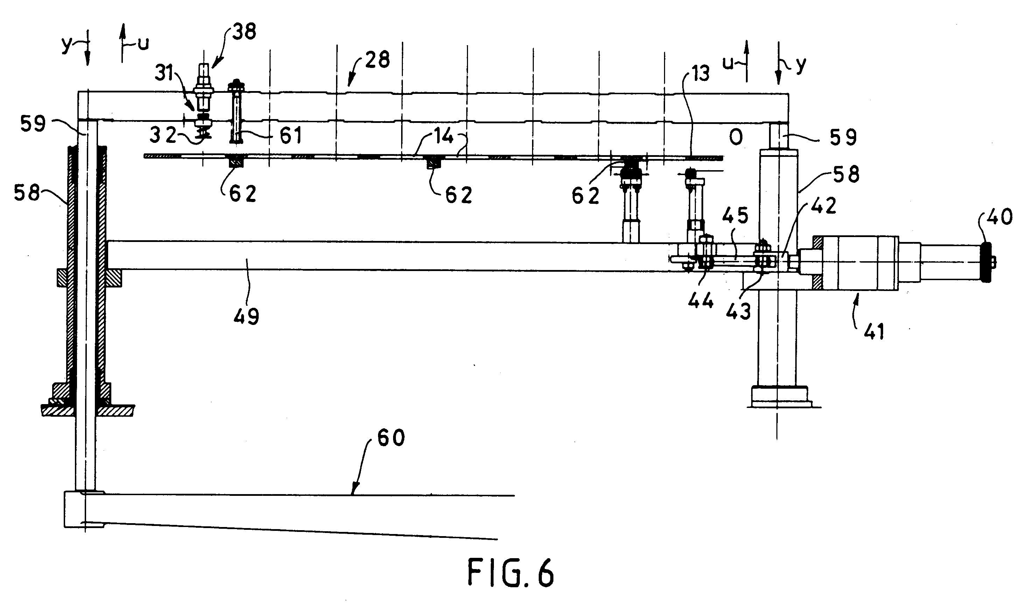

Aus Fig. 6, die viele Bauteile wegen Vereinfachung der Zeichnung nicht zeigt, ist das Zellenbrett 13 im Obertrum O ersichtlich. Der Antrieb 41 ist raumfest an ebenfalls raumfesten maschinenseitigen Tragsäulen 58 montiert. In den Tragsäulen 58 sind Führungsstangen 59 axialverschieblich gelagert. Die Führungsstangen 59 sind oberseitig mittels des Tragjochs 28 und unterseitig mittels einer Antriebstraverse 60 zu einem starren Rahmen miteinander verbunden. Dieser aus den Bauteilen 59, 28 und 60 bestehende Rahmen ist auf- und abwärts entlang den Richtungen u und y angetrieben. Die Funktion ist im Zusammenhang mit der Beschreibung der Fig. 2 und 3 ohne weiteres verständlich. Während also die Antriebsstange 45 ausgefahren wird und sämtliche Laschenpaare 56, 57 mit ihren zugehörigen Druckflächen 35, 36 gegen die Bechermäntel M gedrückt werden, befinden sich die in Abwärtsrichtung y bewegten Tastteller 32 bereits in Anlage auf den Oberseiten Dₒ der Deckel 39, so daß die im Zusammenhang mit den Fig. 2 und 3 bereits beschriebene Reaktion der Taster 31 erfolgen kann.

Wichtig ist es, daß während des Tastvorganges am oberen Tragjoch 28 befestigte Niederhalter 61 das Zellenbrett 13 gegen zellenbrettunterseitige Widerlager 62 drücken, die über Stützen 63 auf den längeren Tragkonsolen 52 ruhen. Wie aus Fig. 5 zu ersehen, eilen die Niederhalter 61 den Tasttellern 32 in Absenkrichtung y voraus. Dadurch, daß das Zellenbrett 13 während des Tast- bzw. Kontrollvorgangs definiert niedergehalten wird, werden unbeabsichtigte Axialbewegungen der Taster 31 - und damit Fehlsignale - vermieden.

Die Bechermittelachsen sind mit E bezeichnet. Aus Fig. 5 ist noch zu ersehen, daß jeweils korrespondierende Laschen 56, 57 zwischen sich Gassen 64 für den Durchtritt der in Becherbahnen C geordneten Becher 15 freilassen.

## Patentansprüche

1. Becherfüllwerk (10) für Nahrungs- und Genußmittel, insbesondere für dünnflüssige bis pastöse Molkerei- und Fettprodukte od.dgl., mit einem umlaufend geführten Fördermittel (K), welches quer zur Förderrichtung (x) in Reihen angeordnete Becheraufnahmen (14) für die Becher (15) trägt, die außerdem parallel zur Förderrichtung (x) angeordnete Bahnen bilden und mit ihnen ausgerichtete Arbeitsstationen (17 - 25) in zeitlich gleichen Vorschubtakten aufeinanderfolgend durchlaufen, wobei eine Dichtigkeitskontroll-Station jeweils einen auf die geschlossenen Deckel (39) aufsetzbaren Signal-Taster (31) sowie mit diesem in Wirkverbindung stehende, den Becherinhalt (27) gegen die Deckelunterseite (Dᵤ) drückende Verdrängungsmittel (35, 36) aufweist, dadurch gekennzeichnet, daß die Verdrängungsmittel aus unterhalb des die Becheraufnahmen (14) bildenden Zellenbretts (13) angeordneten hin- und herbeweglich antreibaren Druckflächen (35, 36) bestehen, welche, während der Signaltaster (31) jeweils auf der Deckeloberseite (Dₒ) aufsitzt, die Becherwandung (M) rückstellbar verformen und daß mehrere gemeinsam mit den Signaltastern (31) absenkbare, diesen jedoch in Absenkrichtung (y) voreilende, das Zellenbrett (13) von oben her gegen ein zellenbrettunterseitiges Widerlager (62) arretierende Niederhalter (61) vorgesehen sind.

2. Becherfüllwerk nach Anspruch 1, dadurch gekennzeichnet, daß jeweils zwei Druckflächen (35, 36) einen Bechermantel (M) außenseitig zugleich an diametral gegenüberliegenden Becherseiten angreifen.

3. Becherfüllwerk nach Anspruch 1 oder nach Anspruch 2, dadurch gekennzeichnet, daß die Druckflächen (35, 36) in einer sich orthogonal zu den Bechermittelachsen (E) bzw. parallel zum Zellenbrett (13) erstreckenden Bewegungsebene verschwenk- oder verschiebbar sind.

4. Becherfüllwerk nach einem der Ansprüche 1-3, dadurch gekennzeichnet, daß die Druckflächen (35, 36) von sich im wesentlichen geradlinig erstreckenden Laschen (56, 57) gebildet sind.

5. Becherfüllwerk nach einem der Ansprüche 1-4, dadurch gekennzeichnet, daß die Druckflächen (35, 36) kantenfrei konvex ausgebildet sind (Fig. 2 und 3).

6. Becherfüllwerk nach Anspruch 4 oder nach Anspruch 5, dadurch genkennzeichnet, daß die sich geradlinig erstreckenden Laschen (56, 57)mit ihren Längsachsen parallel zur Becher-Förderrichtung (x) ausgerichtet sind und daß immer zwei einander parallele Laschen (56, 57), ein Laschenpaar (56, 57) bildend, eine mit einer Becherbahn (C) fluchtende Gasse (64) für den Durchtritt der Becher (15) in Förderrichtung (x) freilassen (Fig. 5).

7. Becherfüllwerk nach einem der vorangehenden Ansprüche, dadurch gekennzeichnet, daß die beiden Laschen (56, 57) eines Laschenpaares zugleich zwei oder mehr aufeinanderfolgende Becher (15) einer Becherbahn (C) angreifen.

8. Becherfüllwerk nach Anspruch 7, dadurch gekennzeichnet, daß mindestens eine Lasche (56, 57) auf mehreren, insbesondere auf zwei synchron angetriebenen Exzenterhebeln (54, 55) gleicher Geometrie drehgelagert ist, deren einander parallelachsige und zu den Bechermittelachsen (E) parallele Exzenterwellen (47) sich jeweils auf einer den Becherbahnen (C) parallelen Fluchtlinie (F) befinden (Fig. 5).

9. Becherfüllwerk nach Anspruch 8, dadurch gekennzeichnet, daß immer zwei Exzenterhebel (54, 55) von einer mittig auf der Exzenterwelle (47) drehfesten, eine einen zweiarmigen Hebel darstellenden Schwinge (S) gebildet sind, wobei Schwingen (S) jeweils zwei Laschen (57, 56) unterschiedlicher Laschenpaare (56, 57) lagern.

10. Becherfüllwerk nach Anspruch 8 oder nach Anspruch 9, dadurch gekennzeichnet, daß sämtliche Schwingen (S) über eine einzige Kuppelstange (48) bewegungseinheitlich angetrieben sind.

11. Becherfüllwerk nach einem der Ansprüche 1 - 10, dadurch gekennzeichnet, daß der Zustellhub der Druckflächen (35, 36) insbesondere über ein zentrales Antriebsagregat (41) einstellbar (bei 40) ist.

## Claims

1. Tub filling installation (10) for foodstuffs and semi-luxury foodstuffs, in particular for liquid to paste-like dairy and fat products or the like, having a rotating conveying means (K) carrying recesses (14) for the tubs (15), which are arranged in rows at right angles to the feed direction (x) and moreover form tracks disposed parallel to the feed direction (x) and in feed cycles of equal duration successively run through work stations (17 - 25) aligned therewith, a tightness control station in each case comprising a signal probe (31) which is placeable onto the closed lid (39) as well as displacement means (35, 36) which are operationally connected to the probe and press the tub contents (27) towards the underside of the lid (Dᵤ), characterized in that the displacement means comprise drivable reciprocating pressure surfaces (35, 36), which are disposed below the cellular board (13) forming the tub recesses (14) and, while the signal probe (31) rests on the top of the lid (Dₒ), restorably deform the tub wall (M), and that a plurality of holding-down devices (61) are provided, which may be lowered jointly with, but in the direction of lowering (y) in advance of, the signal probes (31) and arrest the cellular board (13) from above against an abutment (62) disposed at the underside of the cellular board.

2. Tub filling installation according to claim 1, characterized in that in each case two pressure surfaces (35, 36) act simultaneously at diametrically opposed tub sides upon the exterior of a tub wall (M).

3. Tub filling installation according to claim 1 or claim 2, characterized in that the pressure surfaces (35, 36) are capable of swivelling or displacement in a plane of motion which extends at right angles to the tub centre lines (E) or parallel to the cellular board (13).

4. Tub filling installation according to one of claims 1 to 3, characterized in that the pressure surfaces (35, 36) are formed by substantially rectilinearly extending clips (56, 57).

5. Tub filling installation according to one of claims 1 to 4, characterized in that the pressure surfaces (35, 36) are of an edge-free, convex construction (Figs.2 and 3).

6. Tub filling installation according to claim 4 or claim 5, characterized in that the rectilinearly extending clips (56, 57) are aligned with their longitudinal axes parallel to the tub feed direction (x) and that in each case two clips (56, 57), which are parallel to one another and form a clip pair (56, 57), leave free a gap (64) aligned with a tub track (C) for the passage of the tubs (15) in feed direction (x).

7. Tub filling installation according to one of the preceding claims, characterized in that the two clips (56, 57) of a clip pair act simultaneously upon two or more successive tubs (15) of a tub track (C).

8. Tub filling installation according to claim 7, characterized in that at least one clip (56, 57) is rotatably supported on a plurality of, in particular on two, synchronously driven eccentric levers (54, 55) of identical geometry, whose eccentric shafts (47), which are paraxial to one another and parallel to the tub centre lines (E), are situated in each case on an alignment (F) parallel to the tub tracks (C) (Fig.5).

9. Tub filling installation according to claim 8, characterized in that in each case two eccentric levers (54, 55) are formed by a rocker (S) which is disposed non-rotatably and centrically on the eccentric shaft (47) and constitutes a two-armed lever, with rockers (S) in each case supporting two clips (57, 56) of different clip pairs (56, 57).

10. Tub filling installation according to claim 8 or claim 9, characterized in that all of the rockers (S) are driven with uniformity of movement via a single coupling rod (48).

11. Tub filling installation according to one of claims 1 to 10, characterized in that the infeed stroke of the pressure surfaces (35, 36) is adjustable (at 40), in particular via a central drive unit (41).

## Revendications

1. Dispositif de remplissage de pots (10), pour produits alimentaires et de consommation, en particulier pour produits laitiers et gras liquides à pâteux, ou analogues, avec un moyen de transport (K) guidé dans un mouvement circulant et portant des réceptacles à pots (14), destinés à des pots (15) et disposés transversalement par rapport à la direction de transport (x), formant en outre des pistes, disposées parallèlement à la direction de transport (x) et avec des postes de travail (17 à 25) placés en alignement par rapport au déplacement des pots, qui défilent en se suivant les uns les autres, selon une cadence d'avancement temporellement identique, un poste de contrôle d'étanchéité présentant chaque fois un palpeur transmetteur de signaux (31), pouvant être posé sur les couvercles (39) fermés, ainsi qu'avec un moyen de pénétration (35, 36), lui étant relié fonctionnellement, pressant le contenu du pot (27) contre la face inférieure (Dᵤ) du couvercle,
caractérisé en ce que les moyens de pénétration sont composés de faces de pressage (35, 36), disposées au-dessous du plan de cellules (13) formant les réceptacle à pots (14) et pouvant être entraînées dans un sens et dans l'autre, qui déforment avec possibilité de reprise de forme la paroi de pot (M) pendant que le palpeur transmetteur de signaux (31) repose chaque fois sur la face supérieure de couvercle (Dₒ), et en ce que sont prévus plusieurs serre-flans (61), pouvant être abaissés conjointement avec les palpeurs transmetteurs de signaux (31), en les précédant cependant dans la direction de descente (y), en bloquant le plan de cellules (13) depuis le haut contre une contre-butée (62) située du côté du plan de cellules.

2. Dispositif de remplissage de pots selon la revendication 1,
caractérisé en ce que chaque fois deux faces de pressage (35, 36) saisissent simultanément une enveloppe de pot (M) extérieurement, sur des côtés de pot diamétralement opposés.

3. Dispositif de remplissage de pots selon la revendication 1 ou la revendication 2,
caractérisé en ce que les faces de pressage (35, 36) peuvent pivoter ou se déplacer dans un plan de déplacement s'étendant perpendiculairement aux axes médians de pot (E), ou parallèlement au plan de cellules (13).

4. Dispositif de remplissage de pots selon l'une des revendications 1 à 3,
caractérisé en ce que les faces de pressage (35, 36) sont formées par des pattes (56, 57) s'étendant de façon sensiblement rectiligne.

5. Dispositif de remplissage de pots selon l'une des revendications 1 à 4,
caractérisé en ce que les faces de pressage (35, 36) sont convexes et ne présentent pas d'arêtes (figures 2 et 3).

6. Dispositif de remplissage de pots selon la revendication 4 ou la revendication 5,
caractérisé en ce que les pattes (56, 57) s'étendant de façon rectiligne sont orientées avec leurs axes longitudinaux parallèles à la direction de transport des pots (x) et en ce que toujours deux pattes (56, 57) parallèles, formant une paire de pattes (56, 57) laissent libre un passage (64) aligné par rapport à une piste à pots (C), pour permettre le passage des pots (15) dans la direction de transport (x) (figure 5).

7. Dispositif de remplissage de pots selon l'une des revendications précédentes,
caractérisé en ce que les deux pattes (56, 57) d'une paire de pattes saisissent en même temps deux pots (15) ou plus, se succédant, d'une piste à pots (C).

8. Dispositif de remplissage de pots selon la revendication 7,
caractérisé en ce qu'au moins une patte (56, 57) est montée à rotation sur plusieurs, en particulier sur deux leviers excentriques (54, 55), entraînés en synchronisme et de géométrie identique, dont les arbres d'excentrique (47), dont les axes sont parallèles et qui sont parallèles aux axes médians de pot (E), se trouvent chaque fois sur une ligne d'alignement (F) parallèle aux pistes à pots (C) (figure 5).

9. Dispositif de remplissage de pots selon la revendication 8,
caractérisé en ce que toujours deux leviers excentriques (54, 55) sont formés par un balancier (S) assujetti en rotation en son milieu sur l'arbre d'excentrique (47) et constitué par un levier à deux bras, les balanciers (S) servant chacun de palier de rotation à deux pattes (57, 56) de paires de pattes (56, 57) différentes.

10. Dispositif de remplissage de pots selon la revendication 8 ou la revendication 9,
caractérisé en ce que l'ensemble des balanciers (S) sont entraînés par l'intermédiaire d'une bielle (48) unique, suivant un mouvement unitaire.

11. Dispositif de remplissage de pots selon l'une des revendications 1 à 10,
caractérisé en ce que la course d'accostage des faces de pressage (35, 36) est réglable (en 40), en particulier par l'intermédiaire d'un groupe d'entraînement (41) central.
